# EUROPEAN PATENT APPLICATION

(11) **EP 1 890 463 A1**
(43) Date of publication of application: **20.02.2008**
(21) Application number: 07114353.1
(22) Date of filing: 14.08.2007
(51) Int. Cl.: H04L 29/06

(54) **Accessing interactive services over internet**

(30) Priority: 01.12.2006 US 861962 P; 17.08.2006 EP 06291324
(71) Applicant: Comverse, Ltd., Tel Aviv 69710 (IL)
(72) Inventor: Hersent, Olivier, 75012, PARIS (FR)
(74) Representative: Cabinet Plasseraud

(57) **Abstract**

The invention relates to a method of providing interactive services through a telecommunications network. In the method an audio/visual (A/V) stream and control data is exchanged between an application server (9) and a multiplexing and access control module (7) of the telecommunications network, by means of a multimedia bidirectional interactive protocol. Internet protocol television (IPTV) service protocols are implemented within the telecommunications network for communicating with customer premises television equipment (1), wherein the IPTV protocols include a streaming protocol for transmission to customer premises television equipment (1) of an A/V stream received from the application server (9) and a monodirectional interactive protocol for receiving user commands at the multiplexing and access control module (7). The user commands are further converted into messages of the bidirectional interactive protocol for transmission to the application server (9) and response data is relayed from the application server (9) to the customer premises television equipment (1) from which the user command originates.

## Description

### FIELD OF THE INVENTION

The present invention relates to a method for a customer terminal to access interactive services over the Internet. The invention also relates to a corresponding system, multiplexing and access control module and software program product.

### BACKGROUND OF THE INVENTION

Multimedia application developers create interactive services for customers equipped with third generation (3G) wireless terminals. Such services are typically offered as premium rate services and implemented by means of bidirectional interactive protocols, and especially real-time protocols, of which the most common examples are SIP ("Session Initiation Protocol") as specified by the IETF ("Internet Engineering Task Force") and H.323 / H.243M as specified by the ITU ("International Telecommunications Union"). The same protocols are also used to provide videoconference services. Generally, bidirectional protocols are optimized for symmetric communication, i.e. where both sides can act as a client and a server using the same commands defined in the symmetric communication protocol, e.g. SIP or H.323. A real-time protocol is optimized for the transmission of information with minimal latency, typically low enough to make conversational applications possible, e.g. SIP uses real-time transport protocol (RTP) and NOTIFY/INFO as real-time transport protocol for media and user events; H.323 uses RTP and H.245 User Input Indication as real-time transport protocol for media and user events.

Another popular type of multimedia service relates to the delivery of television programs over Internet protocol (IP) networks (IPTV). Such services are generally proposed by Internet service providers (ISPs). Digital TV broadcast over broadband networks makes use of the MPEG ("Moving Picture Expert Group") standards for audio, video and system aspects. The broadcaster also sends some navigation data enabling the customer to select which programs or portions of the broadcast media stream are to be displayed. In video-on-demand (VOD) services, the hypertext transfer protocol (HTTP) is used in parallel with the real time streaming protocol (RTSP) channel conveying the MPEG media streams to provide some interactivity by which the customer can select programs to be sent by the VOD platform, which acts as a content server to the customer equipment, which acts as a content client and have access to certain limited client/server commands such as pause, fast forward, etc. Such a system offers only very limited interactivity as only commands predefined by RTSP protocol to the VOD server can be used. This is not suitable, for example, to enter user-specific data or to provide access to diversified remote applications possibly running on servers operated by 3^{rd} party interactive application providers.

Currently, a premium rate service developed for multimedia terminals such as videophones or 3G handsets is not accessible to customers who only have television equipment connected to a digital network via a set-top-box or similar interface unit. In view of the large number of potential customers having such equipment, there is a need for a technique that would facilitate the development of interactive applications accessible with such equipment.

### SUMMARY OF THE INVENTION

One object of the invention is to mitigate or overcome the above identified limitations. More specifically, a more advanced method for an end-user to access interactive services over the Internet has been invented.

According to a first aspect of the invention there is proposed a method of providing interactive services through a telecommunications network, the method comprising the steps of:
- exchanging an audio/visual (A/V) stream and control data between an application server and a multiplexing and access control module of the telecommunications network, by means of a bidirectional interactive protocol;
- implementing protocols of an Internet protocol television (IPTV) service within the telecommunications network for communicating with customer premises television equipment, wherein the IPTV protocols include a streaming protocol for transmission to customer equipment of an A/V stream received from the application server and a monodirectional interactive protocol for receiving user commands at the multiplexing and access control module;
- converting the user commands into messages of the bidirectional interactive protocol for transmission to the application server; and
- relaying response data from the application server to the customer premises television equipment from which the user command originates.

By monodirectional protocol it is meant a protocol with an identified client and server side, each supporting a different set of communication commands, e.g. HTTP.

The invention in accordance with an embodiment of the invention has the advantage that the applications can be accessed on demand, without a need for a complex installation process of the applications. The applications do not need to be maintained or updated and they do not become obsolete. Since the applications are provided by an application provider, the applications to be accessed can be very large and dynamic databases, for instance world maps. Furthermore, the invention enables access to almost any truly interactive applications with audio/visual user interfaces through the existing broadband Internet infrastructure.

The invention also relates to a software program product comprising instructions for implementing the method according to the first aspect, when loaded and run on computer means of a network element.

The invention also relates to a multiplexing and access control module for providing interactive services through a telecommunications network as recited in claim 12.

### BRIEF DESCRIPTION OF THE DRAWINGS

Other features and advantages of the invention will become apparent from the description of non-limiting exemplary embodiments, with reference to the appended drawings, in which:
- Figure 1 is a block diagram of a communication system where the embodiments of the invention can be applied;
- Figures 2a and 2b are flow charts illustrating a method in accordance with a first embodiment of the invention;
- Figures 3a and 3b are flow charts illustrating a method in accordance with a second embodiment of the invention.

### DETAILED DESCRIPTION OF THE INVENTION

Some non-limiting embodiments of the invention will be next described in more detail.

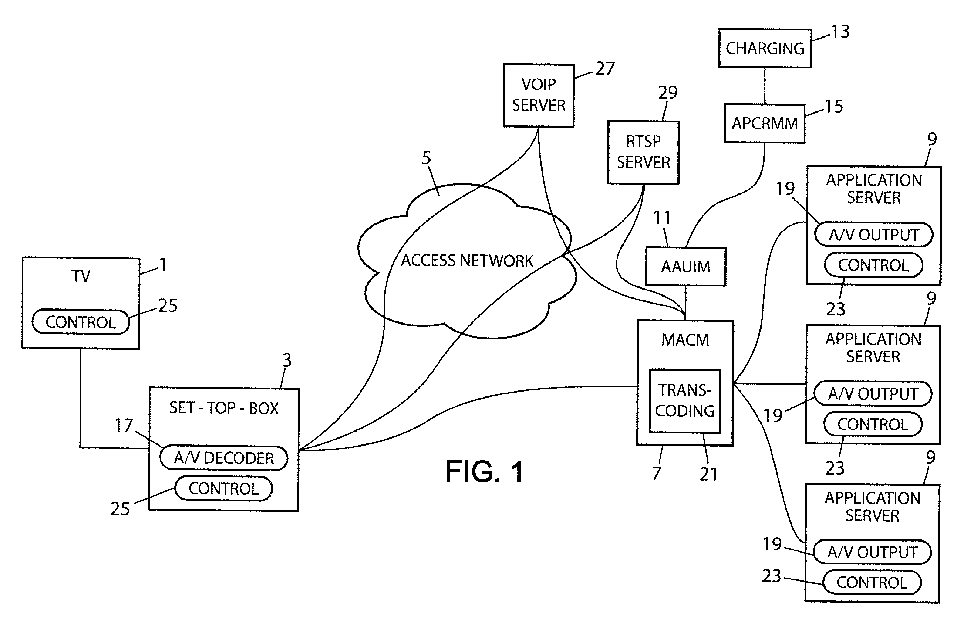

Fig. 1 represents a general network architecture in accordance with an embodiment of the invention. In Fig. 1 there is shown a customer terminal 1, such as a television set 1. The customer terminal 1 is communicatively connected to a customer premises equipment (CPE) or adaptation unit 3, such as a set-top-box 3. The customer terminal 1 is connected to an access network 5 through the set-top-box 3. In this example the access network is an Internet broadband network employing Internet protocol (IP) connecting the customer terminal 1 to application providers 9. In this example the application providers are servers connected to the Internet and the application providers have at least one application that can be remotely accessed.

The customer terminal 1 and the set-top-box 3 comprise control output 25 for sending control data to the network and the set-top-box 3 further comprises an audio/visual decoder (AN decoder) 17 for decoding information received in an A/V encoded format. Examples of A/V encoding formats are for instance MPEG2, MPEG 4 or H.263. The set-top-box 3 could also be physically integrated into the customer terminal 1.

The broadband IP access network 5 may use any technology capable of carrying IP traffic. Examples of such technologies are an asynchronous digital subscriber line (ADSL), synchronous digital subscriber line (SDSL), very-high-bit-rate digital subscriber line (VDSL) or any other DSL variant, data over cable service interface specification (DOCSIS) or any other cable transport scheme, wireless fidelity (WiFi), worldwide interoperability for microwave access (WiMax), universal terrestrial radio access network (UTRAN) or any other wireless data network.

Each application server 9 may comprise several applications, for instance application A, application B, etc., and these applications are deployed in multiple instances such as A1, A2, B1, B2, etc., within an interactive application farm. Each instance can be a physical machine, e.g. a computer, the physical resources necessary to generate the audio/visual (A/V) output streams necessary for the application, and access to any other resource required by the application, e.g. databases. For instance an interior design application may have access to a database of thousands of furniture items from multiple vendors.

Each application instance is capable of generating an AN encoded output stream via an AN input/output 19, for instance in the form of an MPEG2, MPEG4, H.263 or other A/V over IP encoding. Such stream may be generated directly by the application, or indirectly through media IP encoders connected to other A/V interfaces, e.g. red green blue (RGB) to MPEG4 encoder.

The application servers 9 are further arranged for receiving control data from the customer terminals 1. For this purpose each application instance has an input for control data 23.

In an embodiment, the network also comprises VolP server 27 for serving voice connections over IP and real-time streaming protocol (RTSP) server 29 for serving RTSP traffic in the network.

The network shown in Fig. 1 further comprises an application access user interface module (AAUIM) 11, a charging module 13, an access policy control and resource management module (APCRMM) 15 and a multiplexing and access control module (MACM) 7 further comprising a transcoding unit 21. The operation and purpose of these blocks will be described next in connection with the description of interaction of different network elements.

The MACM 7 connects the A/V input/output ports 19 of the application instances to the A/V decoder port 17 of the set-top-box 3 and the control data ports 23 of the application instances to the control data ports 25 of the set-top-box 3. If the A/V output stream from an application server 9 is not based on a coding standard supported by the AN decoder 17 of the recipient set-top-box 3, the transcoding unit 21 of the MACM 7 performs the required transcoding operation.

The A/V data stream is, for instance an MPEG2 or MPEG4 encoded data stream, either unicast or multicast, from the application instances, and the MACM 7 encrypts this stream, if needed and eventually remaps its destination to the appropriate destination IP address and port, e.g. the multicast address of a given IPTV channel, or a direct unicast address of the target AN decoder 17.

The control data flow is generated directly by the customer terminal 1 or by a control unit, e.g. a remote control, of such a terminal. Examples of different control means are for instance IP enabled joystick or keyboard, an infrared remote control causing the set-top-box 3 to generate hypertext transfer protocol (HTTP) requests, or an IP stream generated by a control device driver in the customer terminal 1 central processing unit. For instance a USB or Bluetooth keyboard, with a USB/Bluetooth driver can run in the set-top-box 3, which tunnels the control device data flow into IP packets to the MACM 7.

The customer terminals 1 when initiating a communication session with the application servers 9 use a protocol designed for interactive communications as an access protocol to the application instances. For instance, session initiation protocol (SIP), as defined by IETF (RFC 3261) or by the 3^{rd} Generation Partnership Program (3GPP) is used as an access protocol for the control data and RTP is used to convey the media streams. Also an H.323 protocol defined by ITU is used as an access protocol for the control data.

The MACM 7 or more precisely the transcoding unit 21 of the MACM 7 is arranged for performing required transcodings. For instance it transcodes the H.263 stream from the SIP or H.323 interactive multimedia application instance to an A/V encoded format, such as an MPEG2 required by the set-top-box 3. The transcoding unit 21 also transcodes the HTTP stream generated by the customer terminal's 1 remote control into SIP INFO messages, if SIP is used as the access protocol to the interactive application instances, or to H.245 User Input Indication messages, if H.323 is used as the access protocol to the interactive application instances.

The MACM 7 also implements the relevant techniques such as encryption, key distribution and router access-list control to ensure that only authorized customer terminals 1 can access each application instance. The MACM 7 encrypts the A/V data streams and injects them to the IP access network 5 to be transmitted to the target IP address and port of the destination AN decoder 17. It also distributes the decryption keys to the A/V decoders 17.

Furthermore, the MACM 7 ensures that it propagates to the application instances only control data flows from the appropriate customer terminals 1 currently using this application instance. If SIP is used as the interactive application access protocol, each application instance is identified by a SIP Dialog (From tag, To tag, Call-ID). If HTTP is used as the user's control data flow, i.e. the remote control of the customer terminal 1 causes the set-top-box 3 to generate HTTP requests, then the MACM 7 is responsible for the conversion of each HTTP request generated by the set-top-box 3 of the user, identified by its IP address or any other specific information sent in the HTTP request, into a SIP INFO message as part of the existing SIP Dialog established with the interactive application instance.

The MACM 7 operates under the control of the APCRMM 15. The APCRMM 15 instructs the MACM 7 to connect customer terminals 1 to application instances, possibly for a limited duration. It may also allocate encryption keys to the MACM 7.

The AAUIM 11 provides the customer terminal 1 with a choice of application types, according to the business rules stored in the APCRMM 15. The AAUIM 11 can be, for instance a simple hypertext markup language (HTML) portal accessed by use of the customer terminal 1 through the AN decoder 17. The AAUIM 11 may also be presented as a binary information format for scenes (BIFS) portal to the AN decoder 17.

The APCRMM 15 implements the business rules related to an application access. It receives the customer terminal 1 requests to access a given application type and decides if the customer terminals 1 are allowed to access a given application type and allocates an available application instance. The APCRMM 15 further instructs the MACM 7 to connect the customer terminals 1 with the selected application instances. The APCRMM 15 also generates accounting records necessary to the charging module 13 and limits the duration of application sessions if necessary.

The charging module 13 is responsible for collecting data related to charging of the usage of the application instances. The charging module 13 collects usage records generated by the APCRMM 15 offline or online.

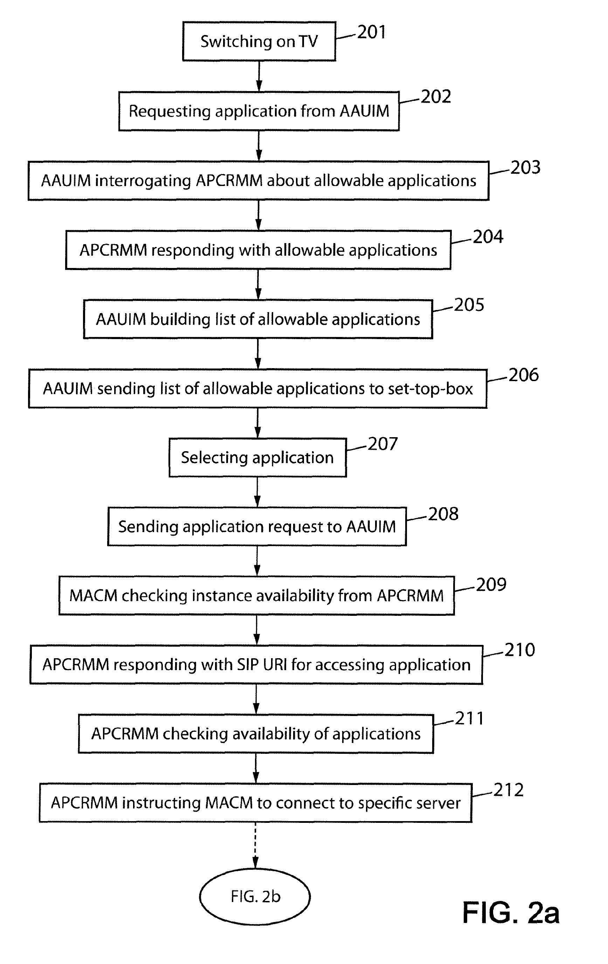

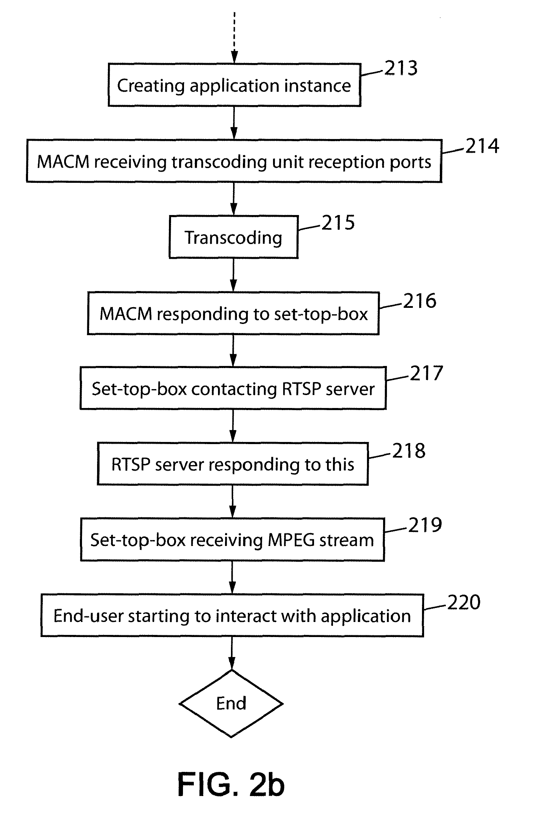

Next a first embodiment of the invention will be described in more detail with reference to the flow chart of Figs. 2a and 2b. In this embodiment the customer terminal 1, in this case a television 1 initiates the communication session with the application server 9, the access protocol employed is SIP and the AAUIM 11 employs HTML. It is to be noted that this is a non-limiting exemplary embodiment and variations are of course possible.

At step 201 the user switches on his/her television 1 and by doing this an embedded HTTP client opens a preconfigured universal resource locator (URL). This is an electronic program guide. In this example, the home page of the electronic program guide displays a link to *"interactive applications",* which is a URL to the AAUIM 11.

Using the infrared remote control, the user of the television 1 selects the *"interactive applications"* link (step 202). This causes the television 1 to load the URL of the AAUIM, e.g. by using GET /serviceList.html. The AAUIM 11 is running on an HTTP server and upon receiving the GET /serviceList.html HTTP request, the HTTP server runs the application logic of the AAUIM 11 and at step 203 provides the IP address of the request sender (i.e. the television 1) to the APCRMM 15 in order to get the list of allowed applications for this user.

At step 204 the APCRMM 15 responds with the applications that the current user is allowed access. Then from this list of allowed applications provided by the APCRMM 15, the AAUIM builds (step 205) an HTML page which is sent (step 206) to the television 1 via the set-top-box 3 for presentation to the user of the television 1. The HTML page can, for instance comprise links to following applications: weather, finance, traffic, news and sports.

Using the remote control, the user of the television 1 then selects (step 207) one of the applications, for instance "weather". Then at step 208 the set-top-box 3 sends the corresponding HTTP Get request to the AAUIM 11 HTTP server. In this example, the MACM 7 checks availability of instances (step 209) for this application from the APCRMM 15. As in this embodiment the service itself is available through the SIP, at step 210 the APCRMM 15 provides the MACM 7 with the SIP universal resource indicator (URI) that is used to access the application.

In this embodiment, at step 211 the APCRMM 15 also checks availability of servers 9 in the interactive application farms, and also which servers 9 implement the "weather" service. At step 212, the APCRMM 15 instructs the MACM 7 to connect to a specific server 9, using SIP as the access protocol. The APCRMM 15 thus also chooses the access protocol. The AAUIM then acts as a SIP user agent.

Then the server 9 creates (step 213) an instance of the interactive application, and responds and maps the application instance to the SIP dialog.

As the MACM 7 needs to perform transcoding to MPEG2 before sending the media to the A/V decoder 17, for this purpose the MACM interacts with the transcoding unit 21. In this example, the transcoding unit 21 can receive RTP media, and make it accessible in MPEG2 format to any RTSP client. At step 214, the MACM 7 obtains reception ports for the RTP through SIP signaling.

At this stage the MACM 7 can inform the server 9 that it is ready to receive data stream from the server 9. Now the transcoding unit 21 starts to receive an A/V media stream, in the form of two RTP streams, from the server 9 and transcodes (step 215) it into MPEG2. It is to be noted that also other A/V encoding formats ban be employed.

Next the MACM 7 responds (step 216) to the GET HTTP request of the set-top-box 3 by indicating an RTSP URI. The RTSP URI could be the only content returned, or it could be one of the frames of a web page.

Then the set-top-box 3 contacts (step 217) the RTSP server using RTSP and the RTSP server responds to this (step 218).

At this stage the set-top-box 3 starts receiving (step 219) the MPEG2 A/V stream from the application server through the RTSP server 29. The data stream could be encrypted by the transcoding unit 21 to prevent hacking, by using a key passed in the SIP exchange with the MACM 7.

Now the user of the television 1 can start to interact (step 220) with the application using, for instance his/her infrared remote control. For instance in this example the "weather" interactive application starts with an animated satellite map indicating regions identified by a number. The user of the television 1 may then press the corresponding number on his remote control. Each key press (e.g. "9") is then notified to the AAUIM 11. In this example the MACM 7 converts it into a SIP INFO message, in the context of the ongoing SIP Dialog.

If the application is controlled by a phone, the application could be controlled by use of dual-tone multifrequency (DTMF) signaling. The applications could be equally controlled by use of interactive voice response (IVR) in telephony. The possibility to develop an application once, and make it available through telephone, UMTS, videophones and IPTV systems is one of the advantages of this interactive application architecture for existing IPTV systems.

In the second embodiment of the invention the interactive session is dynamically established. In this embodiment, the television 1 of the end-user is already switched on before the connection setup. The television 1 is arranged so that it is capable of dynamically presenting "pop-up" type notifications to the end-user. Now the AAUIM 11 can take advantage of this feature to launch an interactive session with the end-user. In the second embodiment of the invention an interactive video conferencing session is launched with the television 1 through the set-top-box 3.

The end-user has access to a VolP service, where the VolP system hosted by the service provider provides the following facilities:
- supervision of call through a computer telephony interface (CTI) or equivalent interface. For instance in public networks supervision of calls can be performed by an intelligent network (IN) application, or by an IP multimedia subsystem (IMS) application server in an IMS network. In a typical the supervision of calls may be derived from the existing colored ring back tone (RBT) service, which is triggered for any incoming call to the subscriber. Colored ring back tone service is provided by several vendors, for instance FunDial™ provided by Comverse Inc of 100 Quannapowitt Parkway Wakefield, MA 01880 (www.comverse.com). The incoming call event provides a special parameter for video calls, i.e. callers providing a video capability. In the example we assume that the CTI link makes accessible session description protocol (SDP) of the caller as a CTI variable.
- an ability to access the RTP video stream, activated by the CTI interface or an equivalent interface.
- an ability to initiate a new call on behalf of the supervised line.

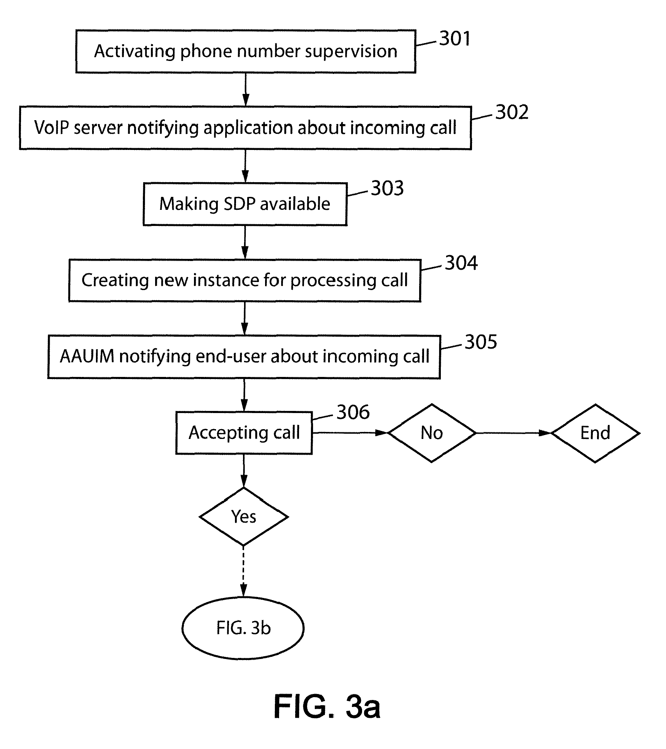

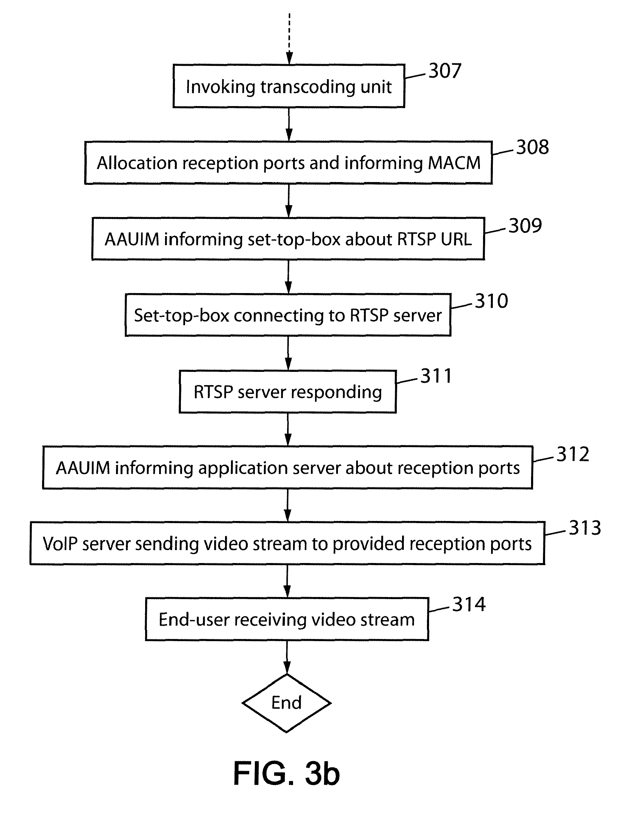

In this example, described in Figs. 3a and 3b, a "videophone emulator" interactive application running on a server 9 simply activates (step 301) the CTI supervision of the phone numbers of the users of this service. For instance user A is called on his/her phone number 0123456789, and the CTI interface of the VolP server 27 notifies (step 302) the "videophone emulator" interactive application that phone line "0123456789" is ringing, and provides (step 303) the SDP made available on the CTI link. The "videophone emulator" application creates (step 304) a new instance to process this call, and notifies the AAUIM 11 by sending a SIP INVITE message to the AAUIM 11.

The AAUIM 11 uses the mechanisms made available by the IPTV system to notify (step 305) the end-user about an incoming video call. For instance, a pop-up will be displayed (step 306) on the top part of the television 1 screen "Video call from 9871234, Accept?". The response of the end-user will be conveyed back to the AAUIM 11 in the form of an HTTP GET request. If the answer of the end-user is positive, then the AAUIM 11 needs to invoke (step 307) the transcoding unit 21 to convert the video stream into an A/V encoded format, such as MPEG2.

The transcoding unit 21 allocates (308) reception ports and includes them in the SDP payload of the SIP signaling response to inform the MACM 7.

Next the AAUIM 11 passes (step 309) the corresponding RTSP URL to the HTTP browser of the set-top-box 3, in response to the HTTP Get command.

The set-top-box 3 then contacts (step 310) the RTSP server 29 (using RTSP protocol) to which the RTSP server 29 responds (step 311).

The set-top-box 3 is now ready to receive the MPEG2 data stream. The AAUIM 11 responds (step 312) to the videophone emulator application, including the reception ports provided by the transcoding unit 21.

The videophone emulator application uses the CTI to request the VolP server 27 to start sending (step 313) the video stream to the provided reception ports. When the end-user takes the call on the phone connected to the VolP gateway, he will receive (step 314) the corresponding video stream on his television set 1, thereby emulating a receive only videophone.

The flow of a video call passed to a TV (1) and phone line using an RBT server, such as Comverse FunDial™, would comprise the following steps:
- The call to the subscriber's number gets routed to the RBT server (because this subscriber has an IN service mark in the switch, either statically configured or retrieved through an home location register query in a mobile network) by the central office service of this customer (a mobile switching center in the case of a mobile network).
- The RBT server realizes that the call is a video call (unrestricted 64K bearer type) in the form of a 3G-324M multiplex.
- The RBT server then does not activate the regular audio ring back tone, but instead sends back a video ring back tone, while placing an audio call to the phone line, and notifying the gateway, such as the set-top-box 3 in the example above, of an incoming video stream.
- When the phone line is picked up, the modified RBT server stops playing the video ring back tone, and separates the audio and video streams coming from the 3G phone (i.e. demultiplexes the H223 structure in the 64K bearer), performs the necessary transcodings, and sends the video to the IPTV gateway, such as the set top box 3 in the example above, the audio to the phone.
- The user experiences a video call, with video on TV and audio on the phone. The 3G phone can either see an avatar (inserted by the modified RBT server), or if the IPTV user is equipped with a web cam (WiFi web cam connected to the IPTV set top box or to the IP network, e.g. WiFi web cam), the modified RBT server can also send a video image to the 3G phone.

Above some embodiments of the invention were described by use of non-limiting examples, however, alterations and medications are possible within the scope of the appended claims.

The invention also relates to the multiplexing and access control module 7 comprising the transcoding unit 21.

The invention also relates to the system comprising at some of the described in Fig. 1.

The invention equally relates to the corresponding computer program product that is capable of implementing the method in accordance with the embodiments of the invention when loaded and run on computer means of the system.

## Claims

1. A method of providing interactive services through a telecommunications network, the method comprising the steps of:
- exchanging (213, 304 an audio/visual (A/V) stream and control data between an application server (9) and a multiplexing and access control module (7) of the telecommunications network, by means of a bidirectional interactive protocol;
- implementing (216-218, 309-311) protocol of an Internet protocol television (IPTV) service within the telecommunications network for communicating with customer premises television equipment (1), wherein the IPTV protocols include a streaming protocol for transmission to customer premises television equipment (1) of an A/V stream received from the application server (9) and a monodirectional interactive protocol for receiving user commands at the multiplexing and access control module (7);
- converting (220, 307, 314) the user commands into messages of the bidirectional interactive protocol for transmission to the application server (9); and
- relaying (220, 314) response data from the application server (9) to the customer premises television equipment (1) from which the user command originates.

2. The method according to claim 1, wherein the bidirectional interactive protocol is a real-time protocol.

3. The method according to claim 2, wherein the bidirectional interactive real-time protocol comprises the Session Initiation Protocol (SIP) or the H.323 protocol.

4. The method according to any of the preceding claims, wherein the monodirectional interactive protocol comprises the hypertext transfer protocol (HTTP).

5. The method according to any of the preceding claims, wherein the application server (9) is arranged for emulating a video telephony service.

6. The method according to claim 5, wherein the telecommunications network is arranged to support colored ring back tone service and the method further comprising deriving supervision of incoming calls from the ring back tone service.

7. The method according to claim 5, wherein the telecommunications network further comprises a ring back tone server and the method comprises routing an incoming call to the ring back tone server, the ring back tone server determining that the incoming call is a video call, the ring back tone server activating a video ring back tone and notifying a gateway connected to the customer premises equipment of the incoming video call.

8. The method according to any of the preceding claims, wherein the telecommunications network further comprises an access policy control module (15) checking (211) availability of the interactive services.

9. The method according to any of the preceding claims, wherein the telecommunications network further comprises an access policy control module (15) instructing (212) the multiplexing and access control module (7) to connect to a specific application server (9).

10. The method according to any of the preceding claims further comprising the application server (9) or the customer premises television equipment (202, 302-304) initializing the exchanging an audio/visual (AN) stream and control data between the application server (9) and the multiplexing and access control module (7) of the telecommunications network.

11. A software program product for implementing the method according to any one of claims 1-10, when loaded and run on computer means of the network.

12. A multiplexing and access control module (7) for providing interactive services through a telecommunications network, the multiplexing and access control module (7) comprising:
- means for exchanging an audio/visual (A/V) stream and control data with an application server (9) of the telecommunications network, by means of a bidirectional interactive protocol;
- means for communicating with customer premises television equipment (1) by use of protocols of an Internet protocol television (IPTV) service, wherein the IPTV protocols include a streaming protocol for transmission to customer premises television equipment (1) of an A/V stream received from the application server (9) and a monodirectional interactive protocol for receiving user commands;
- means for converting the user commands into messages of the bidirectional interactive protocol for transmission to the application server (9); and
- means for relaying response data from the application server (9) to customer premises television equipment (1) from which the user command originates.
